# DEMANDE DE BREVET EUROPEEN

(11) **EP 1 770 631 A1**
(43) Date de publication de la demande: **04.04.2007**
(21) Numéro de dépôt: 05300759.7
(22) Date de dépôt: 20.09.2005
(51) Int. Cl.: G06Q 30/00

(54) **Serveur de clips personnalisés**

(71) Demandeur: Alcatel Lucent, 75008 Paris (FR)
(72) Inventeur: Litteaut, Jacques, 78160, MARLY LE ROI (FR); Coulon, Stéphane, 95810, ARRONVILLE (FR)
(74) Mandataire: Sciaux, Edmond

(57) **Abrégé**

Ce serveur lit un clip personnalisés quand un usager appelant est mis en attente. Il comporte des moyens pour commander le démarrage de la lecture d'un clip (CLIP1) à une position temporelle (t1) qui est celle où la lecture a été arrêté la dernière fois où le même usager a été mis en attente, s'il a déjà été mis en attente.

Application aux réseaux de télécommunication.

## Description

L'invention concerne un serveur de clips personnalisés, un tel clip étant destiné à faire patienter un usager d'un terminal téléphonique, lorsqu'il appelle un autre terminal téléphonique qui est occupé par une communication établie antérieurement. Un clip peut être simplement un extrait d'oeuvre musicale, mais il peut aussi être un message publicitaire, ou donner tout type d'information. Il peut être multimédia : audio, vidéo, texte, etc.

Il est souhaitable d'adapter le contenu d'un clip en fonction de la personne qui le reçoit, par exemple sélectionner une publicité pour un produit qui a des chances d'intéresser cette personne. Il faut donc identifier, aussi bien que possible, l'usager appelant Le numéro d'abonné du terminal appelant permet, dans une certaine mesure, d'identifier l'usager appelant, en utilisant un annuaire inversé. En effet, le numéro d'abonné du terminal appelant est généralement transmis jusqu'au terminal appelé, sauf si l'usager appelant a demandé explicitement qu'il ne soit pas transmis. Mais le terminal appelant peut être utilisé successivement par plusieurs personnes. Il ne permet donc pas d'identifier une personne, de manière sûre. D'autres part, si une même personne peut utiliser différents terminaux, il faut pouvoir associer le nom de cette personne à chacun des numéros correspondant respectivement à ces terminaux.

Le document US 6.842.767 décrit un portail vocal qui transmet des clips audio adaptables en fonction du numéro de téléphone du terminal appelant, ou en fonction d'un profil d'usager, préalablement mémorisé dans une table, en association avec le numéro du terminal appelant : Le clip peut ainsi faire de la publicité pour un commerce situé dans la zone géographique correspondant aux premiers chiffres du numéro ; ou bien la langue utilisée dans le clip peut être sélectionnée en fonction de cette zone géographique, ou d'un profil d'usager. Un profil d'usager est constitué en posant des questions à l'usager considéré, ou bien en observant ses sujets d'intérêt.

Les serveurs de clips audio ou vidéo de types connus diffusent un même clip, à partir de son début, chaque fois qu'un terminal appelant est mis en attente. Un usager donné reçoit donc plusieurs fois les mêmes informations, fournies par le début du clip, mais il ne reçoit peut-être jamais les informations fournies par la fin du clip, si la durée de l'attente est toujours inférieure à la durée du clip entier.

Le but de l'invention est de remédier à cet inconvénient.

L'objet de l'invention est un serveur pour lire un clip personnalisé, quand un usager appelant est mis en attente, caractérisé en ce qu'il comporte des moyens pour commander le démarrage de la lecture d'un clip à une position temporelle qui est celle où la lecture a été arrêté la dernière fois où le même usager a été mis en attente, s'il a déjà été mis en attente.

Le serveur ainsi caractérisé permet de lire un clip complet, et éventuellement une suite de clips, sans répétitions inutiles pour un usager donné, grâce au fait que le serveur se souvient du clip qui a été lu lors de la précédente mise en attente de cet usager, et se souvient de la position temporelle de l'interruption de lecture.

Selon un mode de réalisation préférentiel, les moyens pour démarrer la lecture d'un clip comportent des moyens pour mémoriser un profil, en association avec l'identité d'un usager susceptible d'appeler, ce profil comportant les informations suivantes :
- au moins numéro d'abonné à un réseau de télécommunication,
- l'identité d'un clip dont la lecture a été arrêté la dernière fois où cet usager a été mis en attente, s'il a déjà été mis en attente,
- et la position temporelle de l'instant où la lecture de ce clip a été arrêtée.

Le serveur ainsi caractérisé permet de personnaliser la lecture d'un clip selon plusieurs paramètres définis dans le profil associé à l'identité d'un usager. Par exemple, il permet de sélectionner une langue parmi plusieurs langues pour un même clip vidéo ; ou encore il permet d'identifier un même usager à partir de plusieurs numéros d'abonné contenus dans un profil unique associé à l'identité de cet usager.

L'invention sera mieux comprise et d'autres caractéristiques apparaîtront à l'aide de la description ci-dessous et des figures l'accompagnant :
- La figure 1 illustre le principe de fonctionnement du serveur de lecture de clips selon l'invention, par un exemple de lecture de deux clips pour un même usager au cours de trois appels où il est mis en attente.
- La figure 2 représente le schéma synoptique de deux réseaux de téléphonie privés qui utilisent un serveur selon l'invention.
- La figure 3 représente les échanges de messages entre un terminal appelant, un autocommutateur, et un serveur selon l'invention, dans le cas où le serveur reçoit le numéro d'abonné du terminal appelant mais ne connaît pas l'identité de l'usager appelant.
- La figure 4 représente les échanges de messages entre un terminal appelant, un autocommutateur, et un serveur selon l'invention, dans le cas où le serveur reçoit le numéro d'abonné du terminal appelant mais ne connaît pas l'identité de l'usager appelant
- La figure 5 représente les échanges de messages entre un terminal appelant, un autocommutateur, et un serveur selon l'invention, dans le cas où le serveur reçoit le numéro d'abonné du terminal appelant mais ne connaît pas l'identité de l'usager appelant

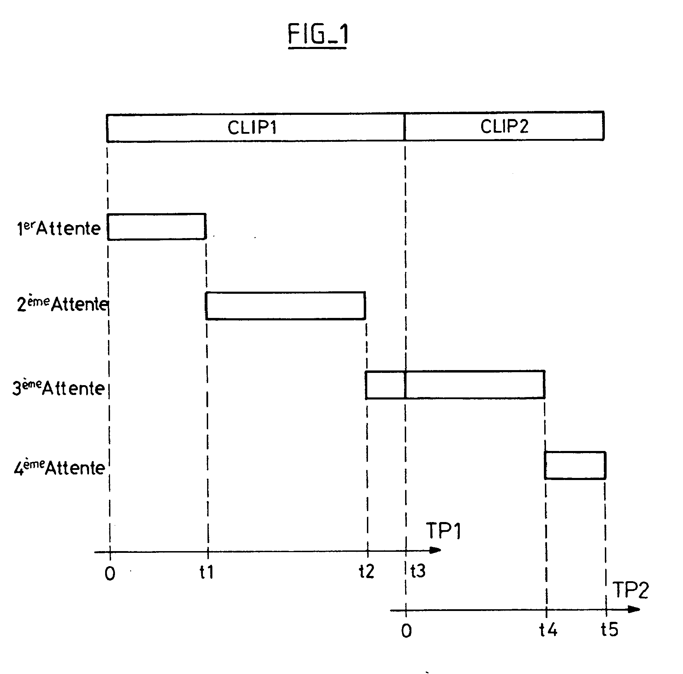

La **figure 1** illustre le principe de fonctionnement du serveur de lecture de clips selon l'invention. Dans cet exemple, une liste de deux clips CLIP1, CLIP2 a été sélectionnée par un administrateur pour un usager donné. Lorsque cet usager est mis en attente une première fois, le serveur de lecture de clips commande la lecture du clip CLIP1 à partir de la position temporelle 0. A la fin de la première attente, il arrête la lecture à la position temporelle t1 sur l'axe TP1 des positions temporelles propre au clip CLIP1. Le clip CLIP1 n'étant pas fini, le serveur mémorise cette position temporelle t1, pour le cas où un nouvel appel de l'usager considéré serait mis encore une fois en attente agrémentée par une lecture de la suite du clip CLIP1.

Lorsque cet usager est mis en attente une deuxième fois, le serveur retrouve cette position temporelle t1 et commande la lecture du clip CDP1 à partir de la position temporelle t1. A la fin de la deuxième attente, la lecture est arrêtée à la position temporelle t2 sur l'axe TP1. Le clip CLIP1 n'étant pas fini, le serveur mémorise cette position temporelle t2, pour le cas où un nouvel appel de l'usager considéré serait mis encore une fois en attente agrémentée par une lecture de la suite du clip CLIP1.

Lorsque cet usager est mis en attente une troisième fois, le serveur commande la lecture du clip CLIP1 à partir de la position temporelle t2. Mais le clip CDP1 se termine avant que l'attente soit finie. Le serveur est informé de la fin du clip CLIP1. Il commande alors la lecture du clip CLIP2 à partir de sa position temporelle 0 sur l'axe TP2 des positions temporelles propre au clip CLIP2. A la fin de la troisième attente, la lecture est arrêtée à la position temporelle t4 sur l'axe TP2. Le clip CLIP2 n'étant pas fini, le serveur mémorise cette position temporelle t4, pour le cas où un nouvel appel de l'usager considéré serait mis encore une fois en attente agrémentée par une lecture de la suite du clip CLIP2.

Lorsque cet usager est mis en attente lors une quatrième fois, le serveur commande la lecture du clip CLIP2 à partir de la position temporelle t4. Mais l'attente se termine avant que la lecture du clip CLIP2 soit finie. Le serveur est informé de l'interruption de la lecture à la position temporelle t5. Le clip CLIP2 n'étant pas fini, le serveur mémorise cette position temporelle t5, pour le cas où un nouvel appel de l'usager considéré serait mis encore une fois en attente agrémentée par une lecture de la suite du clip CLIP2.

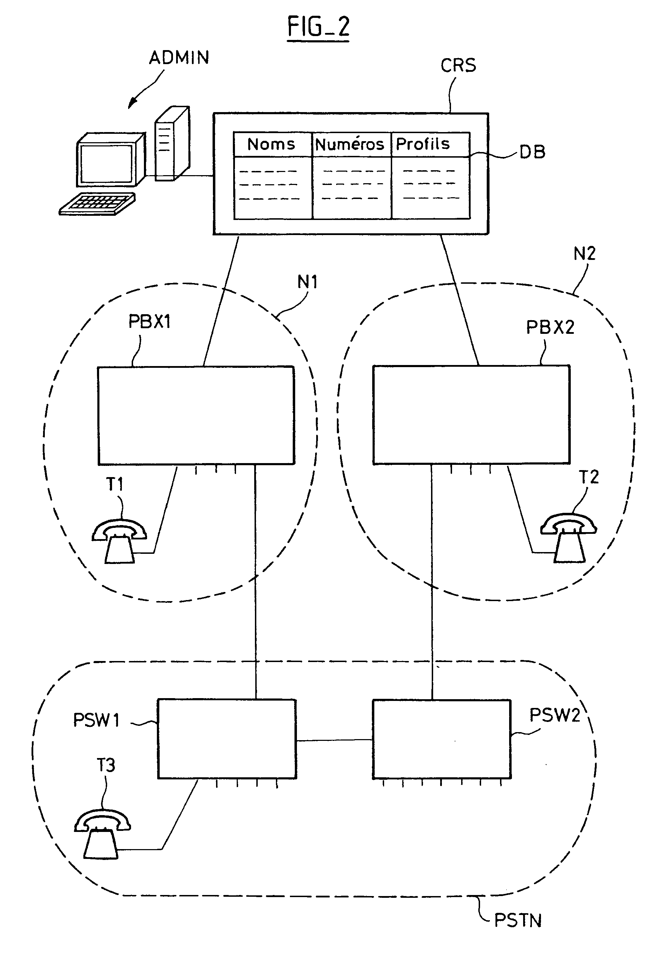

La **figure 2** représente le schéma synoptique d'un exemple dans lequel deux réseaux de téléphonie privés N1 et N2 utilisent un serveur CRS selon l'invention. Ce serveur CRS de lecture de clips audio ou vidéo, fait partie d'un troisième réseau privé (non représenté), ou d'un réseau public de télécommunication. Le réseau privé N1 comporte par exemple un autocommutateur PBX1 relié à des terminaux téléphoniques tels que le poste T1, et relié à un autocommutateur public PSW1 d'un réseau public de télécommunication PSTN. De même, le réseau privé N2 comporte par exemple un autocommutateur PBX2 relié à des terminaux téléphoniques tels que le poste T2, et relié à un autocommutateur public PSW2 du réseau public de télécommunication PSTN.

Le serveur CRS commande la lecture de clips pour les deux réseaux privés N1 et N2 à la fois. La lecture est exécutée dans les autocommutateurs PBX1 et PBX2. Elle permet de faire attendre des usagers qui appellent un poste de l'un des réseaux N1 ou N2 lorsque ce poste est occupé. Le serveur comporte une table DB contenant des informations permettant de personnaliser la lecture des clips.

A chaque nom d'usager connu est associé un profil comportant par exemple :
- une liste de numéros d'abonné à un réseau téléphonique (Téléphone à la maison, au bureau, sur un mobile) ;
- la qualité de cet usager (par exemple : client ou employé, de la société qui bénéficie du serveur de lecture de clips) ;
- sa langue ;
- la liste des clips qu'un administrateur a préalablement sélectionnés pour cet usager ;
- l'identité du clip (parmi ceux sélectionnés pour cet usager) qui doit être lu lors du prochaine appel de cet usager, si le terminal appelé est occupé ;
- la position temporelle (t1) où doit démarrer la lecture du clip qui doit être lu lors du prochaine appel de cet usager. C'est la position temporelle où la lecture a été arrêtée lors de la dernière mise en attente pour cet usager. Ou bien, c'est simplement le début du clip, si cet usager n'a jamais été mis en attente précédemment.

Pour permettre à un autocommutateur tel que PBX1 de pouvoir utiliser le serveur CRS, il est nécessaire d'installer sur cet autocommutateur un logiciel client adapté pour dialoguer avec le logiciel du serveur. Quand ce logiciel a tété installé, l'autocommutateur ouvre une session, de préférence permanente, avec le serveur CRS.

Le serveur CRS est relié à un poste informatique ADMIN permettant de faire les opérations administratives nécessaires pour remplir cette table DB, notamment à partir de fichiers de clients et de fichiers de fournisseurs. Il est à noter qu'un profil par défaut, appelé « USAGER INCONNU », est prévu pour tous les usagers qui ne sont pas identifiables, soit parce que le numéro d'abonné transmis au serveur CRS est absent de la table DB, soit parce qu'aucun numéro d'abonné n'est transmis (appels avec numéros masqués). Ce profil par défaut ne permet pas de personnaliser la lecture. Elle démarre toujours sur le même clip, et toujours au début de ce clip.

Considérons le fonctionnement du serveur CRS dans un exemple où Monsieur X utilise son terminal téléphonique T3 du réseau public PSTN pour appeler le terminal T2 du réseau privé N2, alors que le terminal T2 est déjà occupé par une communication téléphonique précédemment établie.

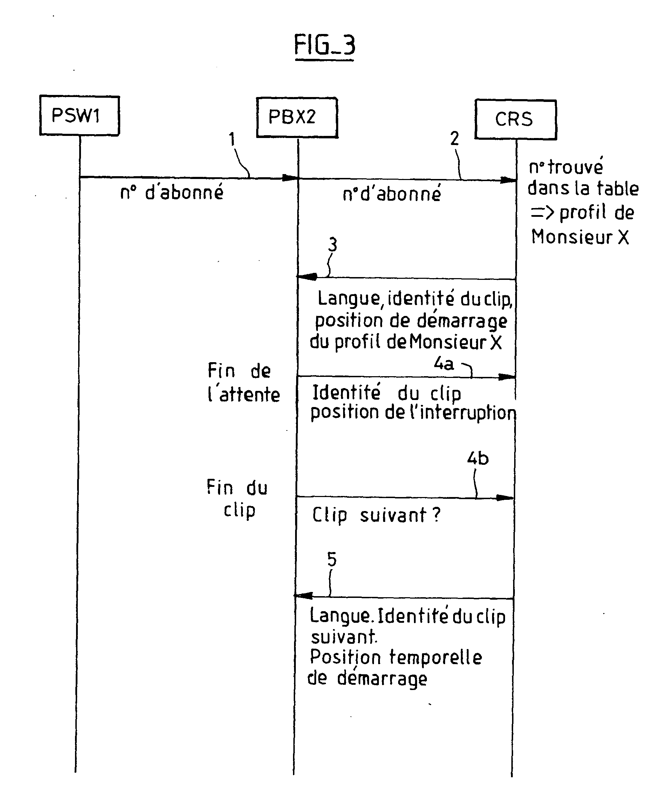

### 1^{er} cas (Figure 3) :

Le numéro d'abonné est transmis de l'autocommutateur public PSW1 jusqu'à l'autocommutateur PBX2, et l'identité de l'utilisateur est connue du serveur CRS de lecture de clips. Les opérations suivantes sont réalisées :
1) Le numéro d'abonné du terminal T3 est transmis par l'autocommutateur public PSW1 à l'autocommutateur privé PBX2.
2) L 'autocommutateur privé PBX2 retransmet le numéro d'abonné du terminal T3 au serveur CRS. Ce dernier recherche ce numéro dans la table DB. Il trouve ce numéro parmi les numéros d'abonné de monsieur X, et il lit alors, dans la table DB le profil de Monsieur X :
   - sa langue (Français) ;
   - la liste des identité (CLIP1, CLIP2) des clips préalablement sélectionnés pour cet usager ;
   - l'identité du clip (parmi ceux sélectionnés pour cet usager) qui doit être lu lors du prochaine appel de cet usager ;
   - et la position temporelle où doit démarrer la lecture.
      Dans l'exemple représenté sur la figure 1 : lors du premier appel, deuxième appel, et quatrième appel, l'identité du clip doit être lu est CLIP1 ; lors du quatrième appel, l'identité du clip qui doit être lu est CLIP2. La position temporelle où doit démarrer la lecture est respectivement 0, t1, t2, t3, t4, pour le premier, deuxième, troisième, quatrième appel.
3) Le serveur CRS envoie à l'autocommutateur PBX2 : la langue de l'usager ; l'identité, CLIP1 par exemple, du clip qui doit être lu (C'est le premier de la liste de clips si aucun clip n'a déjà été commencé pour cet usager), et la position temporelle (par exemple t1) où doit démarrer la lecture. L'autocommutateur PBX2 exécute la lecture.
4a) Si le terminal T2 devient disponible avant la fin du clip CLIP1, l'autocommutateur privé PBX2 arrête le lecture du clip, et met en communication le terminal T3 et le terminal T2, l'attente est terminée. L'autocommutateur privé PBX2 envoie au serveur CRS : l'identifiant du clip qui était en cours de lecture, et la position temporelle correspondant à l'interruption de la lecture de ce clip. Le serveur CRS met à jour le profil de Monsieur X, avec ces informations. Dans l'exemple représenté sur la figure 1 : à la fin de l'attente du premier appel, l'autocommutateur privé PBX2 envoie au serveur CRS : CLIP1, t1.
4b) Si le terminal T2 n'est toujours pas disponible lorsque la lecture du clip CLIP1 se termine, l'autocommutateur PBX2 demande au serveur CRS de lui indiquer quel autre clip il faut lire.
5) Le serveur lui indique la langue de l'usager, l'identité du prochain clip à lire, et la position temporelle de démarrage. Dans l'exemple représenté sur la figure 1, à la fin de la lecture de CLIP1, il commande de lire CLIP2 (Si la liste est épuisée, ou si elle ne mentionne qu'un seul clip, il indique de nouveau le premier clip de la liste). L'autocommutateur PBX2 commence à lire le clip indiqué, à partir de la position temporelle 0, et il continue jusqu'à la libération du terminal appelé T2 (Etape 4a) ou jusqu'à la fin du clip (Etape 4b), ou éventuellement un arrêt de la communication par le terminal appelant T3.

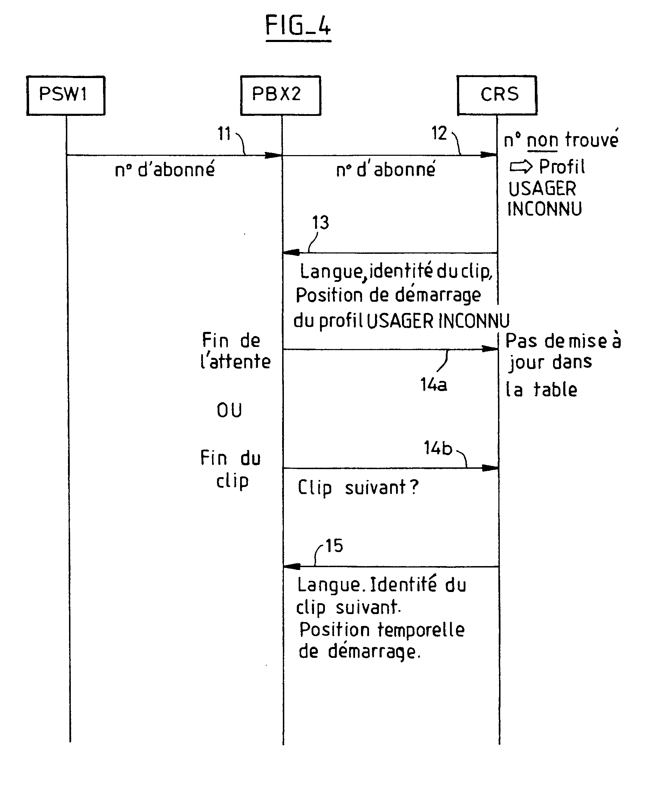

### 2^{ème} cas (Figure 4)

Le numéro d'abonné est transmis jusqu'à l'autocommutateur PBX2, mais ce numéro, et donc l'identité de l'usager appelant, est inconnue du serveur CRS de lecture de clips. Les opérations suivantes sont réalisées :
11) Le numéro d'abonné du terminal T3 est transmis par l'autocommutateur public PSW1 à l'autocommutateur privé PBX2.
12) L 'autocommutateur privé PBX2 retransmet le numéro d'abonné du terminal T3 au serveur CRS. Ce dernier recherche ce numéro dans la table DB. Il ne trouve pas ce numéro parmi les numéros d'abonné contenus dans la table DB. Il lit, dans la table DB , un profil par défaut « USAGER INCONNU » contenant :
   - une langue (Anglais par exemple) ;
   - la liste des identité (CLIP3, CLIP4) des clips préalablement sélectionnés pour ce profil par défaut ;
   - l'identité du clip (parmi ceux sélectionnés pour ce profil par défaut) qui doit être lu lors du prochaine appel par un usager inconnu, cette identité étant toujours celle du premier clip (CLIP3) de la liste, pour tous les appels d'usagers inconnus ;
   - et la position temporelle où doit démarrer la lecture, celle-ci étant toujours la position 0 pour tous les appels d'usagers inconnus.
      D'autre part, le serveur CRS inscrit le numéro d'abonné de l'usager appelant dans un journal des appels pour une exploitation éventuelle par un administrateur. Cet administrateur peut rechercher le nom de cet usager dans un annuaire inversé, et éventuellement le contacter pour collecter des informations permettant de créer un profil pour cet usager dans la table DB.
13) Il envoie à l'autocommutateur PBX2 : la langue de l'usager (Anglais) ; l'identité, CLIP3 du clip qui doit être lu, et la position temporelle 0 où doit démarrer la lecture. L'autocommutateur PBX2 exécute la lecture.
14α) Si le terminal T2 devient disponible avant la fin du clip CLIP3, l'autocommutateur privé PBX2 arrête le lecture du clip, et met en communication le terminal T3 et le terminal T2, l'attente est terminée. L'autocommutateur privé PBX2 envoie au serveur CRS : l'identifiant du clip qui était en cours de lecture, et la position temporelle correspondant à l'interruption de la lecture, parce qu'il sait que l'usager est peut-être identifiable (Il a vu passer son numéro d'abonné, mais il ne sait pas si cet usager est déjà connu ou non dans la table DB du serveur). Le serveur CRS reçoit ces informations mais ne fait aucune mise à jour dans le profil par défaut « USAGER INCONNU ».
14b) Si le terminal T2 n'est toujours pas disponible lorsque la lecture du clip CLIP3 se termine, l'autocommutateur PBX2 demande au serveur CRS de lui indiquer quel autre clip il faut lire.
15) Le serveur lui indique quel est le prochain clip à lire : CLIP4.
L'autocommutateur PBX2 commence à lire le clip indiqué, à partir de la position temporelle 0, et il continue jusqu'à la libération du terminal appelé T2 (Etape 4a) ou jusqu'à la fin du clip (Etape 4b), ou éventuellement un arrêt de la communication par le terminal appelant T3.

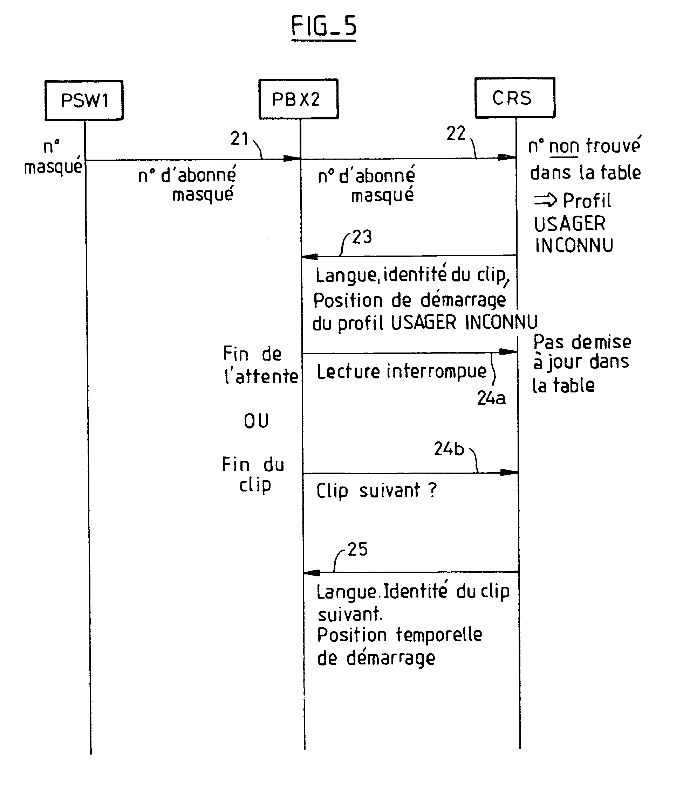

### 3^{ème} cas (Figure 5)

Le numéro d'abonné n'est pas transmis jusqu'à l'autocommutateur PBX2, parce que l'usager ne veut pas communiquer son numéro d'abonné. Donc l'identité de l'usager appelant est inconnue du serveur CRS de lecture de clips. Les opérations suivantes sont réalisées :
21) L'autocommutateur privé PBX2 transmet à l'autocommutateur public PSW1 une indication NUMERO D'ABONNE MASQUE.
22) L 'autocommutateur privé PBX2 retransmet cette indication au serveur CRS. Ce dernier lit, dans la table DB , le profil par défaut appelé « USAGER INCONNU » contenant :
   - une langue (Anglais par exemple) ;
   - la liste des identité (CLIP3, CLIP4) des clips préalablement sélectionnés pour ce profil par défaut ;
   - l'identité du clip (parmi ceux sélectionnés pour ce profil par défaut) qui doit être lu lors du prochaine appel par un usager inconnu, cette identité étant toujours celle du premier clip (CLIP3) de la liste, pour tous les appels d'usagers inconnus ;
   - et la position temporelle où doit démarrer la lecture, celle-ci étant toujours la position 0 pour tous les appels d'usagers inconnus.
23) Il envoie à l'autocommutateur PBX2 : la langue du profil par défaut (Anglais) ; l'identité CLIP3 du clip qui doit être lu, et la position temporelle 0 où doit démarrer la lecture. L'autocommutateur PBX2 exécute la lecture.
24a) Si le terminal T2 devient disponible avant la fin du clip CLIP3, l'autocommutateur privé PBX2 arrête le lecture du clip, et met en communication le terminal T3 et le terminal T2, l'attente est terminée. L'autocommutateur privé PBX2 n'envoie pas au serveur CRS l'identifiant du clip qui était en cours de lecture, ni la position temporelle correspondant à l'interruption de la lecture, parce qu'il sait que l'usager n'est pas identifiable. Le serveur CRS ne fait aucune mise à jour dans le profil par défaut « USAGER INCONNU ».
24b) Si le terminal T2 n'est toujours pas disponible lorsque la lecture du clip CLIP3 se termine, l'autocommutateur PBX2 demande au serveur CRS de lui indiquer quel autre clip il faut lire.
25) Le serveur lui indique quel est le prochain clip à lire : CLIP4. L'autocommutateur PBX2 commence à lire le clip indiqué, à partir de la position temporelle 0, et il continue jusqu'à la libération du terminal appelé T2 (Etape 4a) ou jusqu'à la fin du clip (Etape 4b), ou éventuellement un arrêt de la communication par le terminal appelant T3.

## Revendications

1. Serveur pour lire un clip personnalisé, quand un usager appelant est mis en attente, **caractérisé en ce qu'**il comporte des moyens pour commander le démarrage de la lecture d'un clip (CLIP1) à une position temporelle (t1) qui est celle où la lecture a été arrêté la dernière fois où le même usager a été mis en attente, s'il a déjà été mis en attente.

2. Serveur selon la revendication 1, **caractérisé en ce que** les moyens pour démarrer la lecture d'un clip comportent des moyens (BD) pour mémoriser un profil, en association avec l'identité d'un usager susceptible d'appeler, ce profil comportant les informations suivantes :
- au moins numéro d'abonné à un réseau de télécommunication,
- l'identité d'un clip (CLIP1) dont la lecture a été arrêté la dernière fois où cet usager a été mis en attente, s'il a déjà été mis en attente,
- et la position temporelle (t1) de l'instant où la lecture de ce clip a été arrêtée.

3. Serveur selon la revendication 2, **caractérisé en ce que** les moyens pour démarrer la lecture d'un clip comportent en outre des moyens (BD) pour mémoriser un profil par défaut pour tout usager mis en attente, et pour lequel il n'est pas possible de retrouver un profil spécifique dans lesdits moyens pour mémoriser.

4. Serveur selon la revendication 3, **caractérisé en ce que** les moyens pour démarrer la lecture d'un clip comportent en outre des moyens pour :
- recevoir le numéro d'abonné d'un usager mis en attente,
- rechercher parmi les profils mémorisés un profil contenant ce numéro,
- puis lire les informations que comporte le profil contenant ce numéro, s'il a été trouvé ; et sinon lire les informations que comporte le profil par défaut,
- utiliser les informations ainsi lues, pour commander la lecture d'un clip.
